# EUROPEAN PATENT SPECIFICATION

(11) **EP 1 445 826 B1**
(45) Date of publication and mention of the grant of the patent: **11.04.2007**
(21) Application number: 04250694.9
(22) Date of filing: 10.02.2004
(51) Int. Cl.: H01Q 1/24, H01Q 3/24, H01Q 21/28

(54) **Mobile terminal for switching between omnidirectional and directional antenna**
Mobiles Endgerät zum Umschalten zwischen rundstrahlender und gerichtet strahlender Antenne
Terminal mobile de commutation entre Antenne omnidirectionnelle et directionnelle

(30) Priority: 10.02.2003 JP 2003032468
(43) Date of publication of application: 11.08.2004
(73) Proprietor: FUJITSU LIMITED, Kawasaki-shi, Kanagawa 211-8588 (JP)
(72) Inventor: Mori, Shinichiro, c/o Fujitsu Limited, Kawasaki-shi, Kanagawa 211-8588 (JP)
(74) Representative: Hitching, Peter Matthew

(56) References cited:
- EP-A- 1 237 289
- GB-A- 2 327 572
- US-A- 5 649 306
- US-A- 5 940 040
- US-A- 5 991 643
- US-A1- 2002 094 789
- US-A1- 2003 013 470

## Description

The invention relates to mobile terminals that capture a position by utilizing satellites for GPS (Global Positioning System).

The GPS is a system for deducing a present precise position from pieces of information on a trajectory and a time by receiving radio waves transmitted from a plurality of artificial satellites orbited at an altitude of approximately 20,000 km in the sky.

At the present, the GPS is utilized in a great variety of fields ranging from a car navigation system for an automobile to a location survey technology.

As this type of technology, there is a satellite navigation system, as well as being a antenna device used for a car navigation utilizing the GPS. The satellite navigation system for detecting multipass waves by using a dextrorotatory circularly polarized wave antenna and a levorotatory circularly polarized wave antenna and by comparing an output level of the dextrorotatory circularly polarized wave antenna with an output level of the levorotatory circularly polarized wave antenna.

Further, the GPS is used to get position information when doing emergency call by the cellular phone.

For example, in the event of dialing emergency call to the police by utilizing the cellular phone, the police side grasps neither where the cellular phone is located nor where an accident happens, accordingly. Therefore, this might cause a hindrance on the occasion that the policeman is dispatched to the accident spot. For obviating this problem, there is a system for utilizing the GPS for the emergency call by a contrivance that the cellular phone can notify of its positional information.

Moreover, in addition to the emergency call, there will be provided other portable navigation services utilizing the positional information, such as displaying a restaurant closest to a position where the user himself or herself exists, and so on.

In a case where the cellular phone has a built-in GPS function, however, a position of installing the antenna can not be fixed unlike the automobile. Namely, the cellular phone is unable to keep a fixed direction, and hence the antenna built in the cellular phone points in unspecified directions.

Accordingly, the antenna of the cellular phone does not necessarily receive the radio waves from the GPS satellite in a preferable position and a preferable direction.

Therefore, in case a person carries the cellular phone while attaching it to the waist, there is an instance of measuring the position with the cellular phone attached to the shoulder by separating the antenna unit.

Given herein is an explanation of types of the antennas.

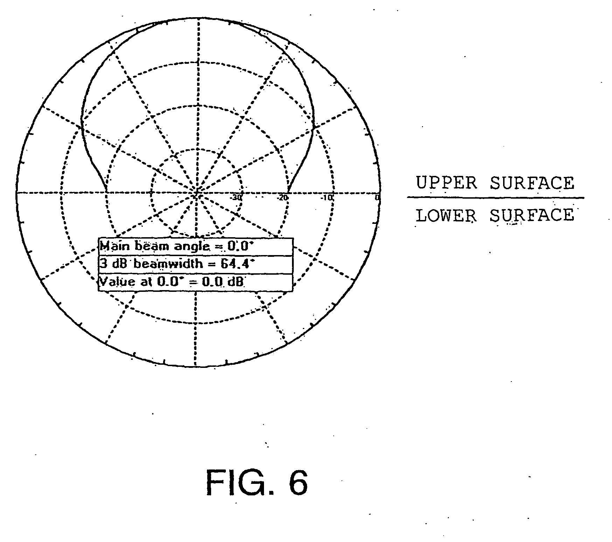

A patch antenna is given as what is typical of the GPS antenna. This patch antenna has, as shown in FIG. 6, directionality only in an upper adverse side direction, and is capable of receiving the waves directly from the satellite with a high sensitivity.

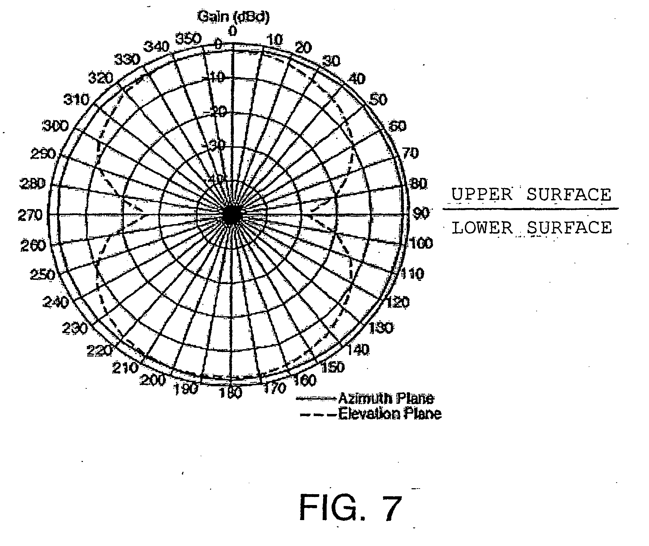

Further, a chip antenna is typical of the antenna for the cellular phone. This chip antenna has a radiation pattern that, as illustrated in FIG. 7, spreads in all directions. Moreover, the chip antenna is extremely small-sized. Therefore, the chip antenna is excellent as the antenna for the cellular phone and is capable of receiving the GPS radio waves and the waves for communications of the cellular phone without changing the antenna.

As described above, however, if the omnidirectional antenna such as the chip antenna is attached to the human body, the radiation pattern of the antenna changes due to an influence by the human body. The omnidirectional antenna is attracted to the human body, resulting in a decline of the receiving sensitivity of the antenna. Further, if the directional antenna like the patch antenna is attached to the human body, the directivity is though small of the influence by the human body. But the directivity of the directional antenna is strong, and it can receive only the radio waves from the satellites in specified directions.

In view of these problems, it is desirable to provide architecture of an antenna for a mobile terminal that reduces the influence of the human body.

### SUMMARY OF THE INVENTION

According to the present invention there is provided a mobile terminal comprising: a first body having a front side and a rear side; a second body, rotatably attached to a first end region of the first body and having a front side such that in a closed configuration the front side of the second body is adjacent to the front side of the first body; a printed circuit board carried by the first body, which printed circuit board extends in a direction from the first end region of the first body to a second end region thereof, and which has a first side adjacent the front side of the first body and a second side adjacent the rear side of the first body; a first omnidirectional receiving antenna mounted on the first side of the printed circuit board in the second end region of the first body; a second receiving antenna mounted on the second side of the printed circuit board in the second end region of the first body and having a directional radiation pattern which extends in a direction away from the second side of the printed circuit board towards the rear side of the first body; and a switching unit operable to switch between the first receiving antenna and the second receiving antenna, characterised in that the switching unit is controlled by a signal from a control unit, the signal being indicative of whether the first and second bodies are in a folded or unfolded configuration, and in that the switching unit is operable to switch to the second receiving antenna when the first and second bodies are in an folded configuration, and is operable to switch to the first receiving antenna when the first and second bodies are in an unfolded configuration.

With this architecture, on the mobile terminal with its installing position unfixed, the switching unit can switch between the receiving antennae. Hence the mobile terminal can receive radio waves in a preferable state.

The switching unit is controlled by a signal from a control unit. The signal from the control unit can be indicative of whether the first and second bodies are in a folded or unfolded configuration. The switching unit can then switch antenna accordingly.

With this architecture, a user of this mobile terminal uses the mobile terminal by setting it in the unfolded state and holding the second body. At this time, the omnidirectional antenna is retained on the side opposite to the securing side between the first body and the second body, i.e., in a position apart from the human body on the printed circuit board within the first body. Accordingly, when the mobile terminal is in an unfolded configuration, (an opened state), the omnidirectional antenna is used apart from the human body and Is therefore employed in a state of being less influenced by the human body. Consequently, the omnidirectional antenna can acquire a sufficient receiving sensitivity for measuring a position.

Further, the directional antenna, when prompting the user to set the direction pattern so as to face outwards against the human body, can receive less of the influence by the human body. Hence, the directional antenna can acquire the sufficient receiving sensitivity for measuring the position even when the mobile terminal is in the folded state (a closed state). Moreover, the switching unit, when a specified receiving sensitivity is not obtained during a receipt by the first antenna, may switch over to the receipt by the second antenna.

With this architecture, when the mobile terminal is in the unfolded state (the opened state) and when the receiving sensitivity of the omnidirectional antenna is equal to or lower than the specified one, the mobile terminal utilizes the directional antenna. This is a case such as pressing the open adverse side against the human body in the state where the mobile terminal is unfolded. At this time, the radiation pattern of the directional antenna is directed on the opposite side to the human body. And hence the directional antenna can obtain the sufficient receiving sensitivity for measuring the position.

As explained above, embodiments of the invention can provide the architecture of the antenna for the mobile terminal, which reduces the influence by the human body.

Reference will now be made, by way of example, to the accompanying drawings, in which:
FIG. 1 shows a configuration of a folding type cellular phone.
FIG. 2 is an exploded perspective view of principal units of the folding type cellular phone.
FIG. 3 is a circuit diagram of the cellular phone.
FIG. 4 shows a flow chart for processing of a changeover switch.
FIG. 5 shows a flow chart for processing of a changeover switch in the modified example.
FIG. 6 is a diagram showing a typical characteristic of a patch antenna.
FIG. 7 is a diagram showing a typical characteristic of a chip antenna.

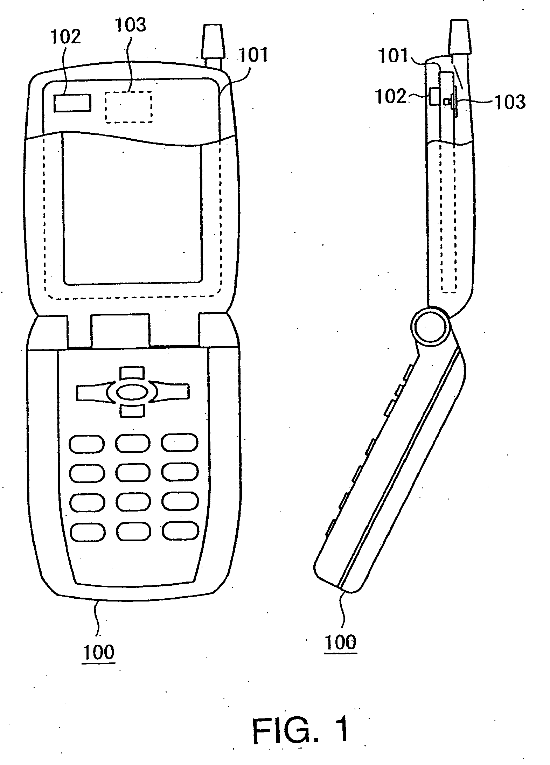

An embodiment in which the invention is applied to a folding type cellular phone will be described on the basis of FIGS. 1 through 4.

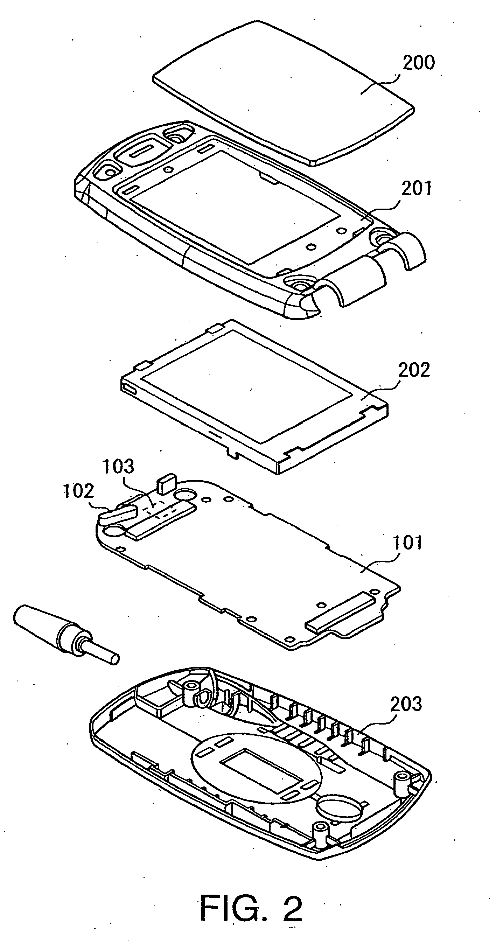

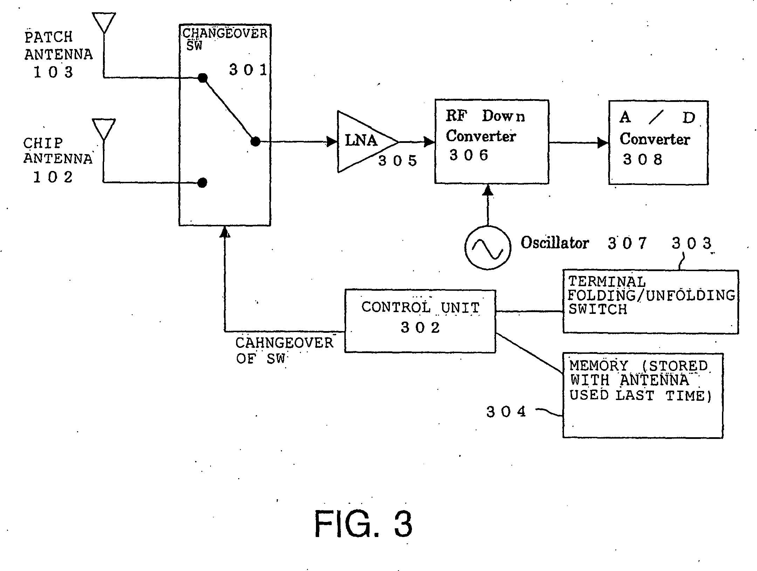

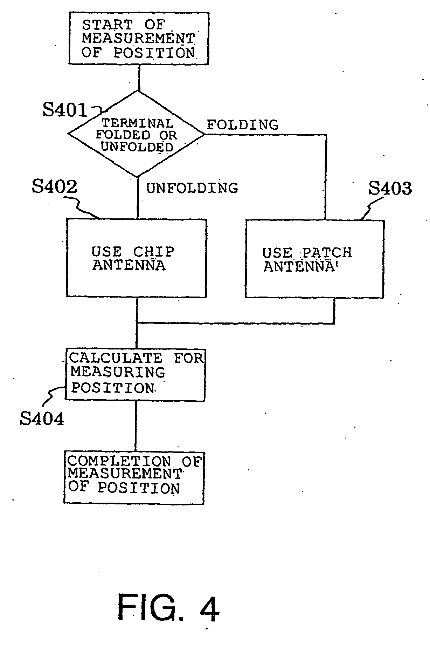

FIG. 1 is a view showing architecture of the folding type cellular phone, FIG. 2 is a development elevation of principal units of the folding type cellular phone, FIG. 3 is a circuit diagram of the folding type cellular phone, and FIG. 4 shows a flow chart for processing of a changeover switch.

Architecture of the folding type cellular phone will be explained referring to FIGS. 1 and 2.

As illustrated in FIG. 1, the cellular phone in the embodiment has a structure that a display body including a display unit such as a liquid crystal display, etc. is arrayed. Further, this cellular phone has a structure that an operation-unit-sided main body on which keys such as presses buttons, etc. is arrayed. Then, the display body and operation-unit-sided main body are secured rotatable through a hinge.

As shown in FIG. 1, a printed circuit board 101 exists on the display side of a folding type cellular phone 100. Then, a chip antenna 102 is provided on this printed circuit board 101 and on a front edge side opposite to the hinge side. Namely, the chip antenna 102 is provided so as to move away from a human body when unfolding the cellular phone.

The chip antenna 102 is lower in maximum receiving sensitivity by approximately 2db - 3db than a patch antenna 103. Namely, the chip antenna 102 is preferable, disposed so as to be hard to receive an influence from the human body.

Normally, a person, when using the folding type cellular phone, operates the buttons, etc. in a handheld state. At this time, the front edge opposite to the hinge side of the cellular phone is located apart from the human body.

Therefore, when the folding type cellular phone is an unfolded state, the chip antenna 102 is disposed at the front end opposite to the hinge side of the cellular phone, whereby the antenna 102 can be disposed so as to be hard to receive the influence from the human body.

Accordingly, the chip antenna 102 can acquire a sufficient receiving sensitivity for measuring its position.

Further, the patch antenna 103 is provided on the flip side on the printed circuit board 101, i.e., on the adverse side opposite to the display side.

As shown in FIG. 1, the patch antenna 103 has a structure in which a flat plate is combined with a spindle-like member. Further, the patch antenna 103 has a directional in a direction of a normal line of the flat plate adverse side (a adverse side opposite to the joining adverse side to the spindle-like member) and in a direction wherein an elevation angle is approximately 15 or larger degrees with respect to the flat plate adverse side. This flat plate adverse side is an upper adverse side in FIG. 6, and a spindle-like member is joined to a lower adverse side in FIG. 6.

Disposing the patch antenna 103 in this way, when folding the cellular phone, a radiation pattern of the patch antenna 103 is directed outside of the cellular phone.

Then, it is possible to obtain the sufficient receiving sensitivity even when carrying the cellular phone, i.e., moving while carrying the cellular phone by prompting a user to set the radiation pattern in a direction opposite to the human body.

Further, when the cellular phone is in its unfolded state, the user uses the cellular phone in a way that makes the cellular phone close to the ear during a talk, and hence the receiving sensitivity of the chip antenna 102 declines.

In case the decline of the receiving sensitivity even in the unfolded state, the receiving antenna is switched over to the patch antenna 103 from the chip antenna 102. Then, in such case, the radiation pattern of the patch antenna 103 becomes directed outwards against the human body. Therefore, this cellular phone is able to reduce the influence from the human body.

Accordingly, the patch antenna 103 can acquire the sufficient receiving sensitivity.

FIG. 2 is the development elevation of the principal units of the folding type cellular phone including the printed circuit board 101, the chip antenna 102 and the patch antenna 103. These principal units are the principal units on the side of the movable-side main body, i.e., the display-side main body of the folding type cellular phone 100. Namely, a development elevation of the operation side is not illustrated, and its explanation is also herein omitted.

FIG. 2 shows, as the principal units, an LCD panel 200, and a movable side front case 201, an LCD module 202, a movable-side printed circuit board 101 and a rear case 203.

The LCD panel 200 is attached to an inner adverse side of the movable-side front case 201. The inner adverse side of the movable-side front case 201 is a adverse side on the side facing the operation-side main body when folding the cellular phone. One edge of the movable-side front case 201 is provided with a hinge so as to be rotatable about the operation-side main body. Further, the movable-side front case 201 is assembled with the rear case 203 to form the movable-side main body. The LCD module 202 and the movable-side printed circuit board 101 are so provided as to be sandwiched in between the movable-side front case 201 and the rear case 203. This LCD module has a function for displaying images and pictures on the display. Moreover, the movable-side printed circuit board 101 is provided with, as described above, the chip antenna 102 and the patch antenna 103.

A construction of the circuit of the cellular phone will be explained referring to FIG. 3.

Note that the explanation given herein covers up to a conversion into a digital signal, starting from a receipt of an observation frequency band signal by the antenna. A process of deducing a present precise position from a trajectory contained in a signal converted into the digital signal and from time information, is well known to those skilled in the art, and hence its explanation is omitted.

To start with, the patch antenna (directional antenna) 103 having the directivity and the chip antenna (omnidirectional antenna) 102 having no directivity are connected to the changeover switch 301.

Then, whether to receive the signal from the patch antenna 103 or to receive the signal from the chip antenna 102, is changed over in accordance with an instruction of a control unit 302.

This control unit 302 is connected to a terminal folding/unfolding switch 303 and to a memory 304 stored with which antenna was used last time.

Herein, the terminal folding/unfolding switch 303 outputs signals related to folding/unfolding states of the cellular phone to the control unit. This terminal folding/unfolding switch 303 is a magnetic sensor utilizing, for example, a hall element. A magnet is provided on any one of the display-side main body and the movable-side main body, and the other is provided with the hall element.

Then, when the magnet comes into proximity to the Hall element, i.e., when the cellular phone is in the folded state, a voltage is generated in directions perpendicular to an electric current flowing across the Hall element and to a magnetic field generated by the magnet. A detection of this voltage makes it possible to detect that the cellular phone is in the folded state.

On the other hand, when the magnet gets away from the Hall element, viz., when the cellular phone is in the unfolded state, the Hall element does not receive any influence by the magnetic field. Hence almost no voltage is generated. In this case, the cellular phone is unfolded state.

Thus, the terminal folding/unfolding switch 303 is capable of detecting the folding/unfolding states of the cellular phone. Then, this detected signal is transferred to the control unit and utilized by the control unit on the occasion of judging whether the antenna is to be switched over.

The signal received by the patch antenna 103 or the chip antenna 102 is passed through the changeover switch 301 and transferred to a low noise amplifier 305 (Low Noise Amplifier which will hereinafter be abbreviated to LNA). The LNA 305 amplifies a feeble signal received by the antenna without adding noises to the greatest possible degree.

Next, this signal is transferred to a frequency converter (RF Down Converter) 306. Herein, if the transferred signal remains high of frequency, it is difficult to amplify and deal with the signal later on. Further, if a bandwidth rate of the transferred signal is increased too much by the same frequency, oscillations are easy to occur. Therefore, the frequency converter 306 converts the signal amplified by LNA 305 into an intermediate frequency band.

Then, the signal converted into the intermediate frequency band is transferred to an A/D converter 308. The A/D converter 308 converts an analog signal into a digital signal.

Fig.4 is given an explanation of a process of switching over the changeover switch 301, depending on whether the folding type cellular phone is folded or unfolded.

To begin with, the control unit 302 judges, based on the signal from the terminal folding/unfolding switch 303, whether the cellular phone is folded or unfolded (S401).

Herein, the control unit 302, in the case of judging that the cellular phone is unfolded, instructs the changeover switch 301 to receive by the chip antenna 102 (S402).

While on the other hand, the control unit 302, in the case of judging in S401 that the cellular phone is folded, instructs the changeover switch 301 to receive by the patch antenna 103 (S403).

Then, a central processing unit (CPU) makes a calculation of measuring the position on the basis of the digital signal (S404).

Thereafter, the control unit 302 terminates the processing.

In the embodiment discussed above, the changeover switch 301 performs switching depending on whether the folding type cellular phone is folded or unfolded. In a modified example, the changeover switch 301 is switched over depending on a receiving sensitivity.

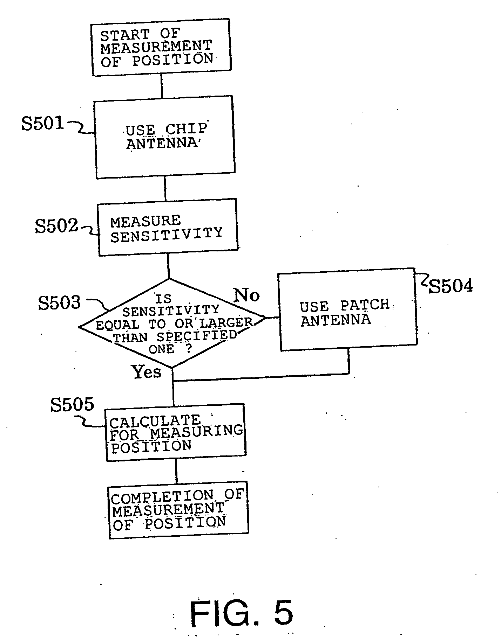

FIG. 5 is a chart showing a processing flow of the changeover switch 301 in the modified example. A process of the changeover switch in the modified example will be described referring to FIG. 5.

At first, the chip antenna 102 is used as an antenna for receiving the observation frequency band signal (S501).

The control unit 302 measures a sensitivity of the received signal by use of the chip antenna (S502).

The control unit 302 judges whether or not the measured sensitivity is equal to or larger than a specified value (S503). The sensitivity being equal to or larger than the specified value implies a case where the number of artificial satellites that could receive the radio waves is equal to or larger than 4. Namely, in a case where a necessary number of radio waves for the calculation of measuring the position could be received, it may be deemed that the specified receiving sensitivity is obtained.

Herein, the control unit 302, in the case of judging that the sensitivity is not equal to or greater than the specified value, instructs the changeover switch 301 to receive by the patch antenna 103 (S504).

Then, the control unit 302 performs the calculation of measuring the position (S505).

While on the other hand, the control unit 302, in the case of judging in S503 that the sensitivity is equal to or greater than the specified value, directly performs the calculation of measuring the position (S505).

Thereafter, the control unit 302 terminates the processing.

In the embodiments described above, the terminal folding/unfolding switch 303 has been described as the magnetic switch involving the use of the Hall element. Embodiments of the invention are not, however, limited to this. For example, whether in the unfolded state or in the folded state may be detected by use of a mechanical switch.

Moreover, in the embodiments described above, the chip antenna 102 is provided on the side of the LCD panel 200, (on the adverse side facing the operation-side main body when the cellular phone is folded) on the opposite side to the patch antenna side (the flip side), on the printed circuit board 101. Embodiments of the invention are not, however, limited to this. For instance, the chip antenna 102 may be provided on the flip side of the printed circuit board 101 in the same way as the patch antenna 103 is provided.

In the modified example (FIG. 5) described above, the chip antenna 102 is initially employed as the receiving antenna, and, in the case where the receiving sensitivity is not equal to or greater than the specified value, there is made the changeover to the patch antenna 103. The patch antenna 103 may also be initially used as the receiving antenna, and, in the case where the receiving sensitivity is not equal to or greater than the specified value, there may be made the changeover to the chip antenna 102.

Note that the embodiments do not limit the scope of the invention at all, and a variety of modified modes are adequately possible within the range understandable to those skilled in the art.

As explained above, the invention can provide the architecture of the antenna for the mobile terminal, which reduces the influence by the human body.

## Claims

1. A mobile terminal comprising:
a first body having a front side and a rear side;
a second body, rotatably attached to a first end region of the first body and having a front side such that in a closed configuration the front side of the second body is adjacent to the front side of the first body;
a printed circuit board (101) carried by the first body, which printed circuit board (101) extends in a direction from the first end region of the first body to a second end region thereof, and which has a first side adjacent the front side of the first body and a second side adjacent the rear side of the first body;
a first omnidirectional receiving antenna (102) mounted on the first side of the printed circuit board (101) in the second end region of the first body;
a second receiving antenna (103) mounted on the second side of the printed circuit board (101) in the second end region of the first body and having a directional radiation pattern which extends in a direction away from the second side of the printed circuit board (101) towards the rear side of the first body; and
a switching unit (301) operable to switch between the first receiving antenna (102) and the second receiving antenna (103),
**characterised in that** the switching unit (301) is controlled by a signal from a control unit (302), the signal being indicative of whether the first and second bodies are in a folded or unfolded configuration, and **in that** the switching unit (301) is operable to switch to the second receiving antenna (103) when the first and second bodies are in an folded configuration, and is operable to switch to the first receiving antenna (102) when the first and second bodies are in an unfolded configuration.

## Patentansprüche

1. Mobiles Endgerät mit
einem ersten Körper mit einer Vorderseite und einer Rückseite,
einem zweiten Körper, der drehbar an einem ersten Endbereich des ersten Körpers befestigt ist und eine so vorgesehene Vorderseite aufweist, dass die Vorderseite des zweiten Körpers im geschlossenen Zustand auf der Vorderseite des ersten Körpers angeordnet ist,
einer von dem ersten Körper getragenen gedruckten Leiterplatte (101), die sich in der Richtung vom ersten Endbereich des ersten Körpers zu seinem zweiten Endbereich erstreckt und eine an der Vorderseite des ersten Körpers angeordnete erste Seite und eine an der Rückseite des ersten Körpers angeordnete zweite Seite aufweist,
einer auf der ersten Seite der gedruckten Leiterplatte (101) im zweiten Endbereich des ersten Körpers montierten ersten omnidirektionalen Empfangsantenne (102),
einer auf der zweiten Seite der gedruckten Leiterplatte (101) im zweiten Endbereich des ersten Körpers montierten zweiten Empfangsantenne (103) mit einem gerichteten Strahlungsmuster, das sich in einer Richtung von der zweiten Seite der gedruckten Leiterplatte (101) weg zur Rückseite des ersten Körpers erstreckt, und
einer Schalteinheit (301), die betriebsfähig ist, um zwischen der ersten Empfangsantenne (102) und der zweiten Empfangsantenne (103) umzuschalten,
**dadurch gekennzeichnet, dass** die Schalteinheit (301) durch ein Signal von einer Steuereinheit (302) gesteuert wird, das angibt, ob sich der erste und der zweite Körper in einem zusammengeklappten oder einem aufgeklappten Zustand befinden, und dass die Schalteinheit (301) so betriebsfähig ist, dass sie auf die zweite Empfangsantenne (103) umschaltet, wenn sich der erste und der zweite Körper im zusammengeklappten Zustand befinden, und auf die erste Empfangsantenne (102) umschaltet, wenn sich der erste und der zweite Körper im aufgeklappten Zustand befinden.

## Revendications

1. Terminal mobile comprenant:
un premier corps ayant un côté avant et un côté arrière;
un second corps, attaché de manière à pouvoir effectuer une rotation sur une première région d'extrémité du premier corps et ayant un côté avant, de telle manière que, dans une configuration fermée, le côté avant du second corps soit adjacent au côté avant du premier corps ;
une carte de circuit imprimé (101) portée par le premier corps, laquelle carte de circuit imprimé (101) s'étend dans une direction de la première région d'extrémité du premier corps à une seconde région d'extrémité de celui-ci, et qui a un premier côté adjacent au côté avant du premier corps et un second côté adjacent au côté arrière du premier corps ;
une première antenne de réception omnidirectionnelle (102) montée sur le premier côté de la carte de circuit imprimé (101) dans la seconde région d'extrémité du premier corps ;
une seconde antenne de réception (103) montée sur le second côté de la carte de circuit imprimé (101) dans la seconde région d'extrémité du premier corps et ayant un diagramme de rayonnement directionnel qui s'étend dans une direction à distance du second côté de la carte de circuit imprimé (101), vers le côté arrière du premier corps ; et
une unité de commutation (301) pouvant être mise en fonctionnement de façon à commuter entre la première antenne de réception (102) et la seconde antenne de réception (103),
**caractérisé en ce que** l'unité de commutation (301) est commandée par un signal provenant d'une unité de commande (302), le signal indiquant si les premier et second corps sont dans une configuration pliée ou dépliée, et **en ce que** l'unité de commutation (301) peut être mise en fonctionnement afin de commuter vers la seconde antenne de réception (103) lorsque les premier et second corps sont dans une configuration pliée, et peut être mise en fonctionnement afin de commuter vers la première antenne de réception (102) lorsque les premier et second corps sont dans une configuration dépliée.
